**Europäisches Patentamt**

**European Patent Office**

**Office européen des brevets**

(19)

(11) **EP 1 383 020 A1**

(12) **EUROPÄISCHE PATENTANMELDUNG**

(43) Veröffentlichungstag:
**21.01.2004 Patentblatt 2004/04**

(51) Int Cl.7: **G05D 7/00**, G01M 3/26,
F04B 11/00, F04B 41/00

(21) Anmeldenummer: **03015258.1**

(22) Anmeldetag: **07.07.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **20.07.2002 DE 10233135**

(71) Anmelder: **SMC Pneumatik Gmbh
63329 Egelsbach (DE)**

(72) Erfinder:
• **Becker, Jürgen
64297 Darmstadt (DE)**

• **Stennull, Jürgen
64823 Gross-Umstadt (DE)**
• **Kohlbacher, Jörg
64395 Höllerbach (DE)**
• **Vogt, Holger
64739 Höchst (DE)**

(74) Vertreter: **Schickedanz, Willi, Dr. Dipl.-Ing.
Langener Strasse 68
63073 Offenbach (DE)**

(54) **Einrichtung zum Reduzieren des Verbrauchs von gasförmigen Medien in druckgasbetriebenen Anlagen**

(57) Die Erfindung betrifft ein System zur Druckluftverbrauchsanalyse. Bei diesem System sind mehrere voneinander unabhängige Bereiche vorgesehen, in denen unterschiedliche Tätigkeiten verrichtet werden. Alle diese Bereiche werden hinsichtlich ihres Luftdrucks zentral überwacht. Wird beispielsweise mittels einer Durchflussmessung festgestellt, dass in einem bestimmten Bereich eine Leckage besteht, kann dieser Bereich von der Zentrale aus abgeschaltet werden. Außerdem kann der Durchfluss so eingestellt werden, dass er exakt den gerade bestehenden Anforderungen entspricht. Hierdurch ist eine Verbrauchsoptimierung möglich, die Energieeinsparungen bis zu 50 % erbringt.

FIG.1

EP 1 383 020 A1

**Beschreibung**

Die Erfindung betrifft eine Einrichtung nach dem Oberbegriff des Patentanspruchs 1.

Für die Fertigung von Bauteilen werden Maschinen benötigt, die ihre Energie aus verschiedenen Quellen beziehen können. Eine mögliche Energiequelle sind Antriebe auf dem Prinzip der Verbrennungsmotoren. Diese Antriebe sind jedoch laut und müssen von Zeit zu Zeit mit Brennstoff versorgt werden. Ein anderer sehr weit verbreiteter Antrieb ist der Elektromotor. Er ist zwar leise, doch kann er in explosionsgefährdeten Räumen nur unter besonderen Sicherheitsvorkehrungen verwendet werden. Außerdem erzeugt er Abriebe, die oft unerwünscht sind.

Weitere bekannte Antriebe beruhen auf dem Prinzip der Hydraulik. Die hierbei verwendeten Hydraulik-Flüssigkeiten sind jedoch in der Regel nicht umweltfreundlich, sodass bei Leckagen in Hydraulik-Anlagen besondere Sicherheitsmaßnahmen getroffen werden müssen.

Besonders umweltfreundlich und deshalb ohne Probleme einsetzbar sind druckgasbetriebener Antriebe, insbesondere pneumatischer Antriebe. Luft ist überall verfügbar und birgt keinerlei Gefahren. Pneumatische Antriebe haben als Antriebsmittel Druckluft. Diese Druckluft wird mittels Kompressoren aus der normalen Umweltluft erzeugt und über Druckluftleitungen den pneumatischen Antrieben, z. B. Stanzmaschinen, zugeführt. Die Druckluftleitungen können Leckagen aufweisen, sodass Druckluft und damit Energie entweicht.

Es ist bereits ein Bidruckversorgungssystem in einem Kraftfahrzeug bekannt, das einen Druckerzeuger und Gruppen von Verbrauchern aufweist (DE 37 33 212 C1) Hierbei wird lediglich der Druck vom Erzeuger mit dem Druck der Verbraucher in einem geschlossenen System verglichen. Ist die Differenz der Drücke größer als ein vorgegebener Schwellwert, wird eine Leckage vom System gemeldet.

Aus der DE 38 28 776 Al ist ein Verfahren bekannt, bei dem Drücke in pneumatischen Systemen gemessen und miteinander verglichen werden, um eine Regelung des Drucks vorzunehmen. Auch mit diesem Verfahren können keine Leckagen erkannt werden.

Weiterhin ist eine Druckluft-Versorgungseinrichtung für Fahrzeug-Druckluftanlagen bekannt, die einen Luftkompressor aufweist, von dessen Ausgang zur Versorgung der Druckluftanlage eine Förderleitung zu einem Lufttrockner führt (DE 195 15 895 A1). Die Förderleitung ist hierbei ausgangsseitig des Lufttrockners in wenigstens zwei Verbraucherkreise verzweigt. Der Druck in den Verbraucherkreisen ist durch Drucksensoren überwachbar. Leckagen können mit dieser Einrichtung ebenfalls nicht erkannt werden.

Es ist außerdem eine Druckluftversorgungseinrichtung bekannt, mit der Energie eingespart werden soll (DE 198 34 705 A1). Hierbei werden Drücke gemessen und mit Schwellwerten verglichen. Bei Überschreiten des oder der Schwellwerte fördert ein Kompressor Druckluft und bei Unterschieden fördert er keine Druckluft.

Es ist weiterhin ein pneumatisches Zustandserfassungssystem zum Verringern des Verbrauchs von Luft, die von einer pneumatischen Quelle geliefert wird, bekannt (US 4 611 619). Dieses System weist eine pneumatische Entlüftungsvorrichtung auf, um Luft aus einer Zweigleitung in die Atmosphäre abzugeben und um den Druck aufgrund des erfassten Zustands in der Zweigleitung zu regeln.

Weiterhin ist eine Vorrichtung zur Prozessüberwachung bei einer eine Vielzahl fluidischer Aktoren aufweisenden maschinellen Einrichtung bekannt, wobei in einer gemeinsamen Leitung zur Druckversorgung und/oder Druckentlastung für alle Aktoren ein Durchflussmesser angeordnet ist (DE 100 52 664 A1).

Ferner ist eine Einrichtung zur Leckageüberwachung in der Druckmittelleitung einer Mehrzahl pneumatischer Belastungsvorrichtungen eines Streckwerkes in einer Spinnmaschine bekannt (DE 196 52 372 A1). Diese Einrichtung weist eine Druckquelle, ein Ventil, einen Druckmesser und eine Vorrichtung auf, die die Stellung des Ventils beeinflusst und die mit dem Druckmesser verbunden ist. Mit dieser Einrichtung soll es möglich sein, die Grenzwerte der Leckageverluste selbsttätig an den Sollwert des Drucks in der Druckmittelzuleitung zu den Belastungselementen des Streckwerks anzupassen.

Schließlich ist auch noch eine Vorrichtung zur Strömungsmessung in Druckluftanlagen bekannt (DE 43 12 837 C1) Hierbei wird die Druckluft an zwei Drucklufteingänge einer Druckluftverteilung geführt. Über deren Druckluftausgänge ist die Druckluft an Anschlusseingänge von Strömungsmesseinrichtungen mit Mikrobrückenluftstromsensor mit gleichem Druck verteilbar. Bei dieser bekannten Strömungsmessung werden die voreingestellten Luftströme zum Endverbraucher gemessen, und bei einer Abweichung von Soll- und Istwert wird eine Meldung erzeugt.

Der Erfindung liegt die Aufgabe zugrunde, den Energieverbrauch in Druckluftanlagen zu minimieren, die wenigstens zwei voneinander unabhängige Bereiche aufweisen.

Diese Aufgabe wird gemäß den Merkmalen des Patentanspruchs 1 gelöst.

Die Erfindung betrifft somit ein System zur Druckluftverbrauchsanalyse und -steuerung. Bei diesem System sind mehrere voneinander unabhängige Bereiche vorgesehen, in denen unterschiedliche Tätigkeiten verrichtet werden. Alle diese Bereiche werden hinsichtlich ihres Luftdrucks zentral überwacht. Wird beispielsweise mittels einer Durchflussmessung festgestellt, dass in einem bestimmten Bereich eine Leckage besteht, kann dieser Bereich von der Zentrale aus abgeschaltet werden. Außerdem kann der Durchfluss so eingestellt werden, dass er exakt den gerade bestehenden Anforderungen entspricht. Hierdurch ist eine Verbrauchsoptimierung möglich, die große Energieeinsparungen bis zu 50 % erbringt.

Der mit der Erfindung erzielte Vorteil besteht insbesondere darin, dass durch das Erkennen von Leckagen und die hierdurch beeinflusste Überwachung und Regelung des Pneumatik-Drucks beim Endverbrauch der Energieverbraucher stark reduziert werden kann. Werden Leckagen erkannt, können daraufhin die Bereiche mit den Leckagen abgeschaltet werden. Außerdem ist es aufgrund der Regelung möglich, den Druck über Nacht abzusenken oder auf Null zu schalten. Dadurch, dass der Massendurchfluss sowohl auf der Erzeugerseite als auch auf der Verbraucherseite gemessen und miteinander verglichen wird, kann der tatsächliche Verbrauch der Luftmenge gemessen werden, was einen eindeutigen Hinweis auf die Leckagen ermöglicht. Die Verwendung eines Massendurchflussgeräts hat den Vorteil, dass immer der aktuelle Massendurchfluss, d. h. der tatsächliche Verbrauch des Mediums, messbar ist. Hierdurch besteht die Möglichkeit, zu jeder Zeit einen Messwert exakt zu bestimmen und auszuwerten bzw. als Regelgröße in einem Regelkreis zu integrieren.

Mit Hilfe der Erfindung kann auch ermittelt werden, in welchem Verbraucherbereich sich die Leckage befindet. Hierzu werden nacheinander die Bereiche mit Hilfe von Sperrventilen von der zentralen Druckluftversorgung getrennt. Ändert sich die Massenflussdifferenz trotz eines abgesperrten Bereichs nicht, muss die Leckage in einem anderen Bereich vorliegen.

Mit der Erfindung können sowohl einzelne Maschinen als auch ganze Druckluftnetze überwacht und reguliert werden. Dabei sind handelsübliche Komponenten eingesetzt, um das System so flexibel und modular wie möglich zu halten. Die Erfindung enthält einen Leitrechner und einzelne Stationen, die von der Erzeugerseite bis hin zum Verbraucherzweig an den Leitrechner gebunden sind. Durch die Anwendersoftware des Leitrechners werden alle Mess- und Verbrauchsdaten verarbeitet und die daraus resultierenden Kostenberechnungen für den Energie- und Verbrauchsaufwand hinterlegt.

Vom Leitrechner her sind alle Grundregulierungen für die einzelnen Stationen möglich. In der Anwendersoftware ist z. B. ein Jahreskalender hinterlegt, der dazu dient, die einzelnen Stationen an Sonn- und Feiertagen sowie an anderen arbeitsfreien Tagen hinsichtlich des Verbrauchs abzusenken. Ebenso kann für jede Station ein Tagesprogramm mit definierter Verbrauchskurve hinterlegt werden. Das Profil der Kurve ist dabei individuell veränderbar.

Ein Ausführungsbeispiel der Erfindung ist in den Zeichnungen dargestellt und wird im Folgenden näher beschrieben. Es zeigen:

Fig. 1     eine Prinzipdarstellung der erfindungsgemäßen Einrichtung;

Fig. 2     eine Detaildarstellung der Sensoren und Schalter in einem Bereich.

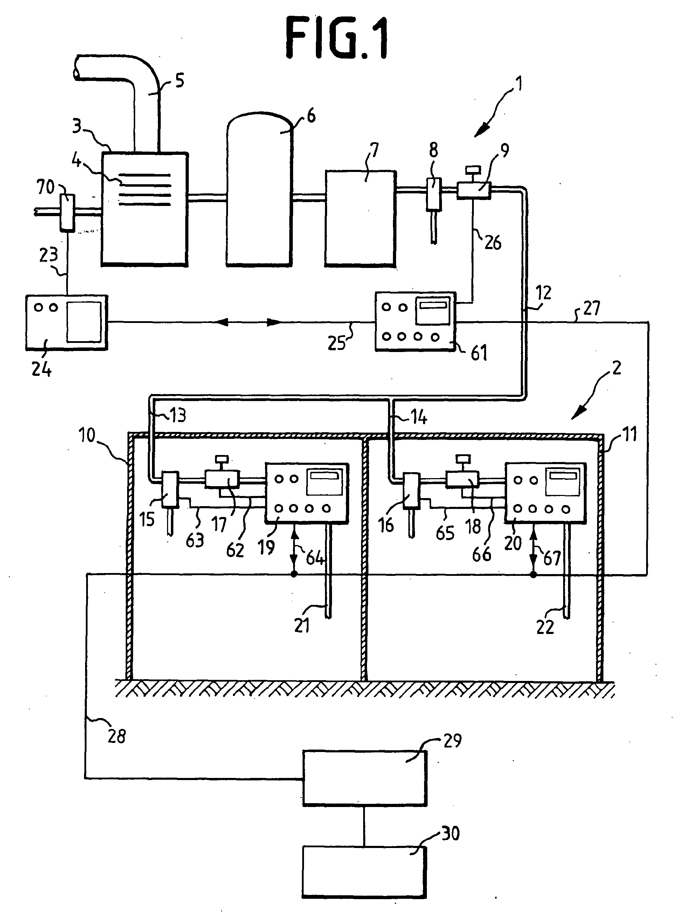

In der Fig. 1 is das Prinzip einer erfindungsgemäßen Einrichtung dargestellt. Dabei ist zwischen einem Erzeugerbereich 1 und einem Verbraucherbereich 2 unterschieden.

Der Erzeugerbereich 1 weist wenigstens einen Kompressor 3 auf, der Luftansaugschlitze 4 und ein Wärmeabführungsrohr 5 aufweist. Die komprimierte Luft gelangt vom Kompressor 3 auf einen Drucklufttank 6, der beispielsweise 1500 Liter fasst. Vom Drucklufttank 6 wird die komprimierte Luft einem Trockner 7 zugeführt, in dem der Luft die Feuchtigkeit entzogen wird. Die getrocknete Luft wird sodann über eine Regler- und Filtereinheit 8 sowie über ein Durchflussmessgerät 9 dem Verbraucherbereich 2 zugeführt. Vor dem Kompressor 3 befindet sich ein Durchflussmessgerät 70, das seine Messdaten über eine Leitung 23 an ein Gerät 24 für die Erfassung des Energieverbrauchs bei der Erzeugung des Mediums weiterleitet. Das Durchflussmessgerät 9 misst den Massendurchfluss auf der Erzeugerseite und meldet seine Daten auf ein Gerät 61 zur Erfassung des Massendurchflusses auf der Erzeugerseite. Der Verbraucherbereich 2 ist seinerseits in wenigstens zwei weitere Bereiche 10, 11 unterteilt, von denen der eine Bereich 10 beispielsweise für eine Baugruppenmontage mittels pneumatischer Geräte und der andere Bereich 11 für eine Zylindermontage mittels pneumatischer Geräte vorgesehen ist.

Mit Hilfe der Geräte 24, 61 kann eine Kostenaufteilung vorgenommen werden. Es gilt:

$$\text{Kosten Massenfluss}_{\text{Erzeuger}} = \text{Kosten Massenfluss}_{\text{Verbraucher}} \ 10$$

$$+ \text{Kosten Massenfluss}_{\text{Verbraucher}} \ 11$$

Kostet beispielsweise die Erzeugung von 1000 nl 5 kWh bzw. € 10,00 und hat der Verbraucherzweig 10 einen Verbrauch von 500 nl bzw. € 5,00, so hat der Verbraucherzweig 11 ebenfalls einen Verbrauch von 500 nl bzw. € 5,00.

Vom Durchflussmessgerät 9 führt eine Druckluftleitung 12 zu dem Bereich und verzweigt sich dort in zwei Einzelleitungen 13, 14, die in den Bereich 10 bzw. in den Bereich 11 führen. Dort gelangt die Druckluft zu einer Regel- und Filtereinheit 15, 16, einem Durchflussmessgerät 17, 18 und einer Mess- und Regeleinheit 19, 20. Aus dieser Mess- und Regeleinheit 19, 20 wird die Druckluft über Leitungen 21, 22 nicht dargestellten Maschinen zugeführt. Diese Leitungen 21, 22 stellen Ringleitungen dar. Bei den Leitungen 23, 25, 26, 27, 28, 61, 62, 63, 64, 65, 66, 67 handelt es sich um Datenleitungen, wobei die Datenleitung 28 zu einer zentralen Recheneinheit 29 führt, welche einem Monitor 30 zugeordnet ist. Die Übertragung der Daten über die Datenleitung 28 erfolgt vorzugsweise seriell.

Es versteht sich, dass statt der beiden Bereiche 10, 11 auch drei, vier, fünf oder mehr Bereiche mit der zentralen Druckluftleitung 12 in Verbindung stehen können. Außerdem können die verschiedenen Bereiche mit verschiedenen Drücken gefahren werden. Herrscht in der Druckluftleitung 12 ein Druck von z. B. 13 bar, so kann auf den Leitungen des Bereichs 10 z. B. ein Druck von 7 bar und auf den Leitungen des Bereichs 11 z. B. ein Druck von 10 bar herrschen. Der Druck auf den Leitungen der Bereiche wird hierbei durch Druckreduzierer bewirkt.

Ob ein Leck in den Druckluftleitungen vorliegt oder nicht, wird durch einen Massendurchflussvergleich zwischen dem Massendurchfluss am Drucklufterzeuger und dem Massendurchfluss an dem Druckluftverbraucher ermittelt. Wenn kein Verbraucher im Verbraucherkreis aktiv ist und es wird trotzdem ein Verbrauch durch den Massendurchflussmesser 9 erfasst, ist ein Leck in diesem Kreis vorhanden. Dies wird an die zentrale Recheneinheit 29 gemeldet.

Die Messung des Massendurchflusses am Drucklufterzeuger wird durch das Durchflussmessgerät 9 vorgenommen. Dagegen erfolgt die Massendurchflussmessung in den Bereichen 10, 11 durch die Durchflussmessgeräte 17, 18. Um ein Leck zu ermitteln, genügt es nicht, die Einzeldurchflüsse der Bereiche zu addieren und vom Durchfluss im Erzeugerbereich zu subtrahieren. Vielmehr muss, wenn unterschiedliche Drücke in den einzelnen Bereichen herrschen, eine Umrechnung vorgenommen werden, denn die unterschiedlichen Drücke in den Leitungen hinter den Durchflussmessgeräten 17, 18 bewirken einen nicht vergleichbaren Durchfluss.

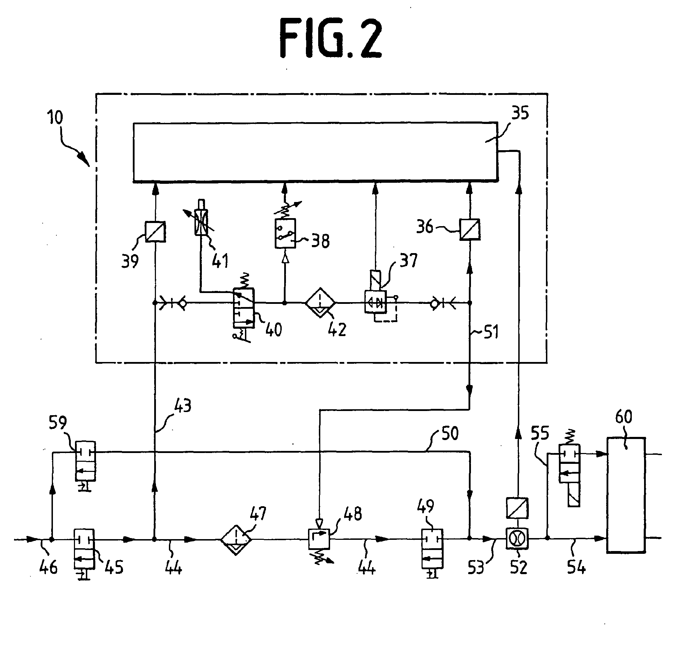

In der Fig. 1 sind die Druckluftleitungen 21 und 22 nur andeutungsweise dargestellt. Eine nähere Darstellung findet sich in der Fig. 2, die eine Detaildarstellung der Sensoren, Druckluftsensoren und Schalter in einem der Druckgasverbraucherbereiche zeigt.

Die Hauptleitung 46 in Fig. 2 entspricht fünktionsmäßig der Hauptleitung 12 in Fig. 1. Diese Hauptleitung 46 wird über den Absperrhahn 45, das Filter 47, den Druckregler 48, den Absperrhahn 49 und das Flussmessgerät 52 auf die Verbraucher in den Bereichen 10, 11 gegeben.

Der Block 60 steht für alle Verbraucher eines Bereichs. Diese Verbraucher sind im Einzelnen nicht dargestellt. Der Druck der Hauptleitung 46 von z. B. 13 bar wird durch den Druckregler 48 auf z. B. 7 bar heruntergeregelt, sodass das Flussmessgerät einen Durchfluss bei 7 bar misst. Das Flussmessgerät 52 könnte z. B. auch hinter dem Absperrhahn 45 angeordnet werden. In diesem Fall müsste jedoch das Filter 47 unmittelbar hinter dem Absperrhahn 45 vorgesehen werden.

Hinter dem Absperrhahn 45 geht von der Hauptleitungsstück 44 die Nebenleitung 43 ab, die zu dem Drucksensor 39 führt. Der Drucksensor 39 misst also den Druck, wie er von dem Drucklufterzeuger im Druckgasverbraucherbereich ankommt, d. h. bei den hier angenommenen 13 bar. Dieser Druck wird an die Steuerung 35 gemeldet. Der Drucksensor 36 misst dagegen den Druck nach der Herabregelung auf den niedrigen Arbeitsdruck, d. h. bei den hier angenommenen 7 bar.

Das Durchflussmessgerät 52 erfasst den Durchfluss im Druckgasverbraucherbereich 10. Dieser Durchfluss wird an die Steuereinheit 35 gemeldet, die ihn weiter an die Zentralsteuerung 29 meldet.

Bei der Steuereinheit 35 handelt es sich um eine frei programmierbare Steuereinrichtung bezeichnet, die sich in der Mess- und Regeleinheit 19 (Fig. 1) befindet. Mit dieser Steuerung 35 sind ein Drucksensor 36, ein Proportionalventil 37, ein Druckschalter 38 und ein weiterer Drucksensor 39 verbunden. Zwischen dem Drucksensor 39 und dem Druckschalter 38 liegt ein Absperrventil 40, das mit einem variablen Drosselventil 41 in Verbindung steht. Zwischen dem Absperrventil 40 und dem Proportionalventil 37 befindet sich ein Filter 42.

Der Drucksensor 39 liegt über eine Luftdruckleitung 43 an einer Leitung 44, die über ein Absperrventil 45 mit der Hauptleitung 46 verbunden ist. In dieser Leitung 44 liegen auch noch ein Filter 47, ein Druckregler 48 und ein Absperrhahn 49. Um die Leitung 44 mit den erwähnten Bauteilen ist eine Nebenschlussleitung 50 gelegt, in der sich ein Absperrhahn 59 befindet. Der Druckregler 48 liegt an einer Leitung 51, an der auch der Drucksensor 36 liegt. Ein Durchflussmesser 52 liegt in einer Leitung 53, die an die abgehende Hauptleitung 54 anschließt. Parallel zur Hauptleitung 54 liegt eine weitere Leitung 55, in der sich ein Absperrventil befindet. Der vom Durchflussmesser 52 gemessene Durchfluss wird an die Steuerung 35 gemeldet.

Eine Leckage in einem Druckluftverbraucherbereich wird auf folgende Weise erkannt.

Der maximale Massenfluss durch einen Verbraucherbereich 10, 11 ist durch die Summe aller Verbräuche der Verbraucher in den Verbraucherbereichen 10, 11 bestimmt und bildet somit einen Grenzwert. Wird dieser Grenzwert in einem Verbraucherbereich überschritten, liegt eine Leckage vor. Die Leckage in einem Verbraucherkreis kann somit durch eine Schwellwertüberwachung ermittelt werden.

Liegt keine Leckage vor, entspricht der Massenfluss auf der Erzeugerseite dem Massenfluss auf der Verbraucherseite. Bei einer Leckage entweicht ein Teil der Druckluft auf der Verbraucherseite ins Freie, d. h. ein Teil der Druckluft verpufft ungenutzt. Der auf der Verbraucherseite gemessene Massendurchfluss ist folglich geringer als der Massenfluss auf der Erzeugerseite. Es gilt

$$\text{Massenfluss}_{\text{Erzeuger}} = \text{Massenfluss}_{\text{Verbraucher}} + \text{Massenfluss}_{\text{Leckage}}$$

Stellt man also fest, dass der verbraucherseitig gemessene Durchfluss geringer als der erzeugerseitige Massenfluss ist, so liegt ein Leck vor. Da der erzeugerseitige Massenfluss niemals ganz exakt dem verbraucherseitigen Massenfluss entspricht, also stets kleinere Abweichungen bestehen, legt man zweckmäßigerweise eine bestimmte Schwelle fest, bei der eine Leckage indiziert wird. Es gilt

$$\text{Massenfluss}_{\text{Leckage}} = \text{Massenfluss}_{\text{Erzeuger}} - \text{Massenfluss}_{\text{Verbraucher}}$$

$$\Delta_{\text{Massenfluss}} = \text{Massenfluss}_{\text{Erzeuger}} - \text{Massenfluss}_{\text{Verbraucher}}$$

$$\Delta_{\text{Massenfluss}} = \text{festgelegter Schwellwert}$$

Erst wenn dieser Schwellwert überschritten wird, wird ein Leck signalisiert.

Um einen Schwellwert leichter setzen zu können, kann der $\text{Massenfluss}_{\text{Verbrauch}}$ als Festwert vorgegeben werden.

Um ein solches Leck sicher zu erfassen, wird das verbraucherseitige Flussmessgerät 52 zweckmäßigerweise direkt vor dem Verbraucher angeordnet. Würde man das Flussmessgerät unmittelbar am Eingang des Verbraucherkreises anordnen, z. B. wo sich der Absperrhahn befindet, würden Leckagen zwischen diesem Eingang 45, 46 und dem Verbraucher 60 nicht erfasst.

Sind mehrere Druckgasverbraucherbereiche vorgesehen, werden die Summen von deren Massendurchflüssen mit dem Massendurchfluss am Erzeuger verglichen. Ist die Schwelle $\Delta_{\text{Massenfluss}}$ überschritten, steht fest, dass ein Leck vorliegt. Es ist jetzt aber noch nicht bekannt, in welchem Druckgasverbraucherbereich die Leckage aufgetreten ist.

Um die Leckstelle zu orten, werden die Druckgasverbraucherbereiche nacheinander von der Hauptleitung getrennt, indem ein Sperrhahn geschlossen wird.

Es wird dann erneut ein Vergleich zwischen verbraucherseitigem und erzeugerseitigem Massendurchfluss durchgeführt. Wird dabei wieder ein Schwellwert überschritten, steht fest, dass die Ursache des Lecks nicht in dem abgeschalteten Verbraucherkreis liegen kann. Es wird dann der nächste Verbraucherkreis von der Hauptleitung abgetrennt usw., bis kein Schwellwert mehr überschritten wird. Man weiß dann, dass in dem vorletzten Verbraucherkreis ein Leck ist. Trat beim Abtrennen auch des vorletzten Verbraucherkreises keine Schwellwertüberschreitung auf, liegt die Leckage in diesem vorletzten Verbraucherkreis.

Bei einer Störung, bei ausgelöstem "Not-Aus" oder bei Überschreiten des eingestellten Schwellwerts kann der jeweilige Verbraucherbereich vom Mediumnetz getrennt werden, ohne die anderen Bereiche zu beeinflussen. Dieser Vorgang wird an die zentrale Recheneinheit 29 gemeldet. Die Steuereinheiten der einzelnen Bereiche arbeiten im "Stand-Alone"-Betrieb.

**Patentansprüche**

**1.** Einrichtung zum Reduzieren des Verbrauchs von gasförmigen Medien in druckgasbetriebenen Anlagen, die einen zentralen Druckgaserzeuger und wenigstens zwei Druckgasverbraucherbereiche aufweist, **gekennzeichnet durch**

   a) wenigstens einen Gasdurchflussmesser (9) am Druckgaserzeuger (5, 6, 7);
   b) wenigstens einen Gasdurchflussmesser (17, 18; 52) in jedem Druckgasverbraucherbereich (10,11);
   c) wenigstens eine Vergleichseinheit (29, 61), welche die erzeugerseitigen Gasdurchflüsse mit den verbraucherseitigen Gasdurchflüssen vergleicht und bei einer vorgegebenen Abweichung zwischen den beiden Gasdurchflüssen ein Signal abgibt.

**2.** Einrichtung nach Anspruch 1, **dadurch gekennzeichnet, dass** die Vergleichseinheit (29, 61) die bewertete Summe der Gasdurchflüsse in den wenigstens zwei Druckgasverbraucherbereichen (10, 11) mit dem Gasdurchfluss am Druckgaserzeuger (5, 6, 7) vergleicht.

3. Einrichtung nach Anspruch 1, **dadurch gekennzeichnet, dass** in jedem Druckgasverbraucherbereich (10, 11) ein Absperrhahn (45) vorgesehen ist, mit dem das vom Druckgaserzeuger (5, 6, 7) kommende Druckgas von dem Verbraucher (60) der Druckgasverbraucherbereiche (10, 11) gesperrt werden kann.

4. Einrichtung nach Anspruch 1, **dadurch gekennzeichnet, dass** die Vergleichseinheit (29, 61) die Bewertung der Gasdurchflüsse in den wenigstens zwei Druckgasverbraucherbereichen (10, 11) vornimmt.

5. Einrichtung nach Anspruch 1, **dadurch gekennzeichnet, dass** in jedem Druckgasverbraucherbereich (10, 11) die gleichen Mess- und Regeleinheiten (15, 17, 19; 16, 18, 20) vorgesehen sind.

6. Einrichtung nach Anspruch 1, **dadurch gekennzeichnet, dass** in jedem Druckgasverbraucherbereich (10, 11) ein Drucksensor (15, 16) und eine Druckregeleinheit vorgesehen sind.

7. Verfahren zur Feststellung einer Leckage in einer Einrichtung nach Anspruch 1, **dadurch gekennzeichnet, dass** der erzeugerseitige Massendurchfluss mit dem verbraucherseitigen Massendurchfluss verglichen wird und bei einer vorgegebenen Abweichung zwischen den beiden Massenflüssen ein Signal erzeugt wird.

8. Verfahren nach Anspruch 7, **dadurch gekennzeichnet, dass** zur Feststellung des Druckgasverbraucherbereichs, in dem eine Leckage aufgetreten ist, die Druckgasverbraucherkreise (10, 11) nacheinander vom zentralen Druckgaserzeuger (5, 6, 7) getrennt werden und ein Druckgasdurchflussvergleich zwischen der Summe der Druckgasverbräuche der nicht getrennten Druckgasverbraucherbereiche und den Massendurchflüssen am Druckgaserzeuger (5, 6, 7) vorgenommen wird.

9. Verfahren nach Anspruch 7, **dadurch gekennzeichnet, dass** zur Feststellung des Druckgasverbraucherbereichs (10, 11), in dem eine Leckage aufgetreten ist, alle Druckgasverbraucherbereiche (10, 11) bis auf einen von der zentralen Druckgasversorgungsleitung (12) abgetrennt werden und ein Vergleich zwischen dem Druckgasdurchfluss der nicht abgetrennten Druckgasverbraucherkreise mit dem Druckgasdurchfluss an dem zentralen Druckgaserzeuger (5, 6, 7) durchgeführt wird, wobei die nicht abgeschalteten Kreise wechseln.

# FIG.1

# FIG.2

Europäisches
Patentamt

# EUROPÄISCHER RECHERCHENBERICHT

Nummer der Anmeldung

EP 03 01 5258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,A | DE 102 47 541 A (GEN MOTORS CORP N D GES D STAA) 3. Juli 2003 (2003-07-03)<br>* Zusammenfassung *<br>* Absatz [0008] - Absatz [0009] *<br>* Absatz [0018] *<br>* Absatz [0021] - Absatz [0022] *<br>* Abbildungen 1-5 *<br>--- | 1-9 | G05D7/00<br>G01M3/26<br>F04B11/00<br>F04B41/00 |
| P,A | US 2003/086789 A1 (RAGHAVACHARI SRIDHARAN) 8. Mai 2003 (2003-05-08)<br>* Zusammenfassung *<br>* Absatz [0004] - Absatz [0006] *<br>* Absatz [0020] *<br>* Absatz [0023] *<br>* Absatz [0039] - Absatz [0041] *<br>* Absatz [0064] *<br>* Abbildungen 1-4 *<br>--- | 1-9 | |
| A | DE 196 52 372 A (ZINSER TEXTILMASCHINEN GMBH) 18. Juni 1998 (1998-06-18)<br>* Zusammenfassung *<br>* Spalte 2, Zeile 22 - Spalte 3, Zeile 9 *<br>* Spalte 3, Zeile 38 - Zeile 45 *<br>* Abbildungen 1-3 *<br>--- | 1-9 | **RECHERCHIERTE SACHGEBIETE (Int.Cl.7)**<br><br>G05D<br>G01M<br>F04B |
| A | WO 95 31353 A (MCNEILUS TRUCK & MFG) 23. November 1995 (1995-11-23)<br>* Zusammenfassung *<br>* Seite 3, Zeile 26 - Seite 5, Zeile 2 *<br>* Seite 5, Zeile 31 - Seite 6, Zeile 2 *<br>* Abbildung 2 *<br>----- | 1-9 | |

Der vorliegende Recherchenbericht wurde für alle Patentansprüche erstellt

| Recherchenort | Abschlußdatum der Recherche | Prüfer |
|---|---|---|
| MÜNCHEN | 19. September 2003 | Pöllmann, H.M. |

## ANHANG ZUM EUROPÄISCHEN RECHERCHENBERICHT
## ÜBER DIE EUROPÄISCHE PATENTANMELDUNG NR.          EP 03 01 5258

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2003

| Im Recherchenbericht angeführtes Patentdokument | | Datum der Veröffentlichung | Mitglied(er) der Patentfamilie | | Datum der Veröffentlichung |
|---|---|---|---|---|---|
| DE 10247541 | A | 03-07-2003 | DE | 10247541 A1 | 03-07-2003 |
| | | | JP | 2003187834 A | 04-07-2003 |
| US 2003086789 | A1 | 08-05-2003 | KEINE | | |
| DE 19652372 | A | 18-06-1998 | DE | 19652372 A1 | 18-06-1998 |
| | | | DE | 59704599 D1 | 18-10-2001 |
| | | | EP | 0849383 A2 | 24-06-1998 |
| | | | JP | 10226931 A | 25-08-1998 |
| | | | US | 5873230 A | 23-02-1999 |
| WO 9531353 | A | 23-11-1995 | AU | 697054 B2 | 24-09-1998 |
| | | | AU | 1601495 A | 05-12-1995 |
| | | | DE | 69523181 D1 | 15-11-2001 |
| | | | DE | 69523181 T2 | 20-06-2002 |
| | | | EP | 0832011 A1 | 01-04-1998 |
| | | | ES | 2166395 T3 | 16-04-2002 |
| | | | WO | 9531353 A1 | 23-11-1995 |
| | | | US | 5748077 A | 05-05-1998 |

EPO FORM P0461

Für nähere Einzelheiten zu diesem Anhang : siehe Amtsblatt des Europäischen Patentamts, Nr.12/82